(19) Europäisches Patentamt
European Patent Office
Office européen des brevets

(11) **EP 3 971 893 B1**

(12) **EUROPEAN PATENT SPECIFICATION**

(45) Date of publication and mention
of the grant of the patent:
**19.06.2024 Bulletin 2024/25**

(21) Application number: **21201950.9**

(22) Date of filing: **23.06.2011**

(51) International Patent Classification (IPC):
**G10L 19/26** (2013.01)     G10L 19/02 (2013.01)
G10L 19/107 (2013.01)     G10L 19/20 (2013.01)

(52) Cooperative Patent Classification (CPC):
**G10L 19/26;** G10L 19/0212; G10L 19/107;
G10L 19/20

(54) **AUDIO DECODING WITH SELECTIVE POST FILTER**

AUDIODEKODIERUNG MIT SELEKTIVEM NACHFILTER

DECODAGE AUDIO AVEC FILTRE POSTÉRIEUR SÉLECTIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.07.2010 US 36123710 P**

(43) Date of publication of application:
**23.03.2022 Bulletin 2022/12**

(62) Document number(s) of the earlier application(s) in
accordance with Art. 76 EPC:
**19196423.8 / 3 605 534
18166150.5 / 3 422 346
16166358.8 / 3 079 154
14164773.5 / 2 757 560
11743032.2 / 2 589 046**

(73) Proprietor: **Dolby International AB
Dublin, D02 VK60 (IE)**

(72) Inventors:
• **RESCH, Barbara**
**113 30 Stockholm (SE)**
• **KJOERLING, Kristofer**
**113 30 Stockholm (SE)**
• **VILLEMOES, Lars**
**113 30 Stockholm (SE)**

(74) Representative: **Dolby International AB
Patent Group Europe
77 Sir John Rogerson's Quay
Block C
Grand Canal Docklands
Dublin, D02 VK60 (IE)**

(56) References cited:
**WO-A1-99/38155**

• **MAX NEUENDORF (EDITOR): "WD7 of USAC", 92.
MPEG MEETING; 19-04-2010 - 23-04-2010;
DRESDEN; (MOTION PICTURE EXPERT GROUP
OR ISO/IECJTC1/SC29/WG11), no. N11299, 26
April 2010 (2010-04-26), XP002658193,**
• **BARBARA RESCH ET AL: "Finalization of CE on
an improved basspost filter operation for the
ACELP of USAC", 94. MPEG MEETING;
11-10-2010 - 15-10-2010; GUANGZHOU; (MOTION
PICTURE EXPERT GROUP OR ISO/IEC
JTC1/SC29/WG11),, no. M18379, 6 October 2010
(2010-10-06), XP030046969,**
• **ANONYMOUS: "Study on ISO/IEC
23003-3:201x/CD of Unified Speech and Audio
Coding", 94. MPEG MEETING;11-10-2010 -
15-10-2010; GUANGZHOU; (MOTION
PICTUREEXPERT GROUP OR ISO/IEC
JTC1/SC29/WG11),, no. N11659, 16 November
2010 (2010-11-16), XP030018154, ISSN:
0000-0009**

**Description**

<u>Cross-reference to related application</u>

This application is a European divisional application of European patent application EP 19196423.8 (reference: D10008EP07), for which EPO Form 1001 was filed 10 September 2019.

<u>Technical field</u>

The present invention generally relates to digital audio coding and more precisely to coding techniques for audio signals containing components of different characters.

<u>Background</u>

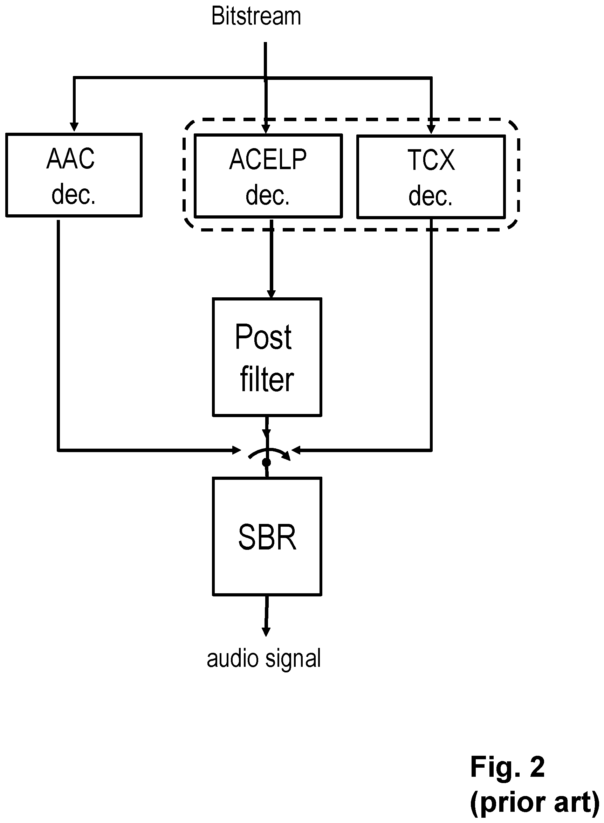

A widespread class of coding method for audio signals containing speech or singing includes *code excited linear prediction* (CELP) applied in time alternation with different coding methods, including frequency-domain coding methods especially adapted for music or methods of a general nature, to account for variations in character between successive time periods of the audio signal. For example, a simplified Moving Pictures Experts Group (MPEG) Unified Speech and Audio Coding (USAC; see standard ISO/IEC 23003-3) decoder is operable in at least three decoding modes, Advanced Audio Coding (AAC; see standard ISO/IEC 13818-7), algebraic CELP (ACELP) and transform-coded excitation (TCX), as shown in the upper portion of accompanying figure 2.

The various embodiments of CELP are adapted to the properties of the human organs of speech and, possibly, to the human auditory sense. As used in this application, CELP will refer to all possible embodiments and variants, including but not limited to ACELP, wide- and narrow-band CELP, SB-CELP (sub-band CELP), low- and high-rate CELP, RCELP (relaxed CELP), LD-CELP (low-delay CELP), CS-CELP (conjugate-structure CELP), CS-ACELP (conjugate-structure ACELP), PSI-CELP (pitch-synchronous innovation CELP) and VSELP (vector sum excited linear prediction). The principles of CELP are discussed by R. Schroeder and S. Atal in Proceedings of the IEEE International Conference on Acoustics, Speech, and Signal Processing (ICASSP), vol. 10, pp. 937-940, 1985, and some of its applications are described in references 25-29 cited in Chen and Gersho, IEEE Transactions on Speech and Audio Processing, vol. 3, no. 1, 1995. As further detailed in the former paper, a CELP decoder (or, analogously, a CELP speech synthesizer) may include a pitch predictor, which restores the periodic component of an encoded speech signal, and an pulse codebook, from which an innovation sequence is added. The pitch predictor may in turn include a long-delay predictor for restoring the pitch and a short-delay predictor for restoring formants by spectral envelope shaping. In this context, the pitch is generally understood as the fundamental frequency of the tonal sound component produced by the vocal chords and further coloured by resonating portions of the vocal tract. This frequency together with its harmonics will dominate speech or singing. Generally speaking, CELP methods are best suited for processing solo or one-part singing, for which the pitch frequency is well-defined and relatively easy to determine.

To improve the perceived quality of CELP-coded speech, it is common practice to combine it with *post filtering* (or *pitch enhancement* by another term). U.S. Patent No. 4 969 192 and section II of the paper by Chen and Gersho disclose desirable properties of such post filters, namely their ability to suppress noise components located between the harmonics of the detected voice pitch (long-term portion; see section IV). It is believed that an important portion of this noise stems from the spectral envelope shaping. The long-term portion of a simple post filter may be designed to have the following transfer function:

$$H_E(z) = 1 + \alpha\left(\frac{z^T + z^{-T}}{2} - 1\right),$$

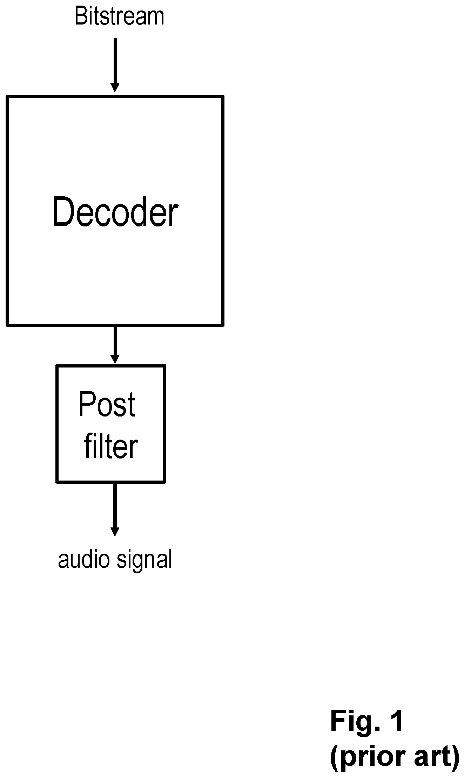

where T is an estimated pitch period in terms of number of samples and $\alpha$ is a gain of the post filter, as shown in figures 1 and 2. In a manner similar to a comb filter, such a filter attenuates frequencies $1/(2T)$, $3/(2T)$, $5/(2T)$, ..., which are located midway between harmonics of the pitch frequency, and adjacent frequencies. The attenuation depends on the value of the gain $\alpha$. Slightly more sophisticated post filters apply this attenuation only to low frequencies - hence the commonly used term *bass* post filter - where the noise is most perceptible. This can be expressed by cascading the transfer function $H_E$ described above and a low-pass filter $H_{LP}$. Thus, the post-processed decoded $S_E$ provided by the post filter will be given, in the transform domain, by

$$S_E(z) = S(z) - \alpha S(z) P_{LT}(z) H_{LP}(z),$$

where

$$P_{LT}(z) = 1 - \frac{z^T + z^{-T}}{2}$$

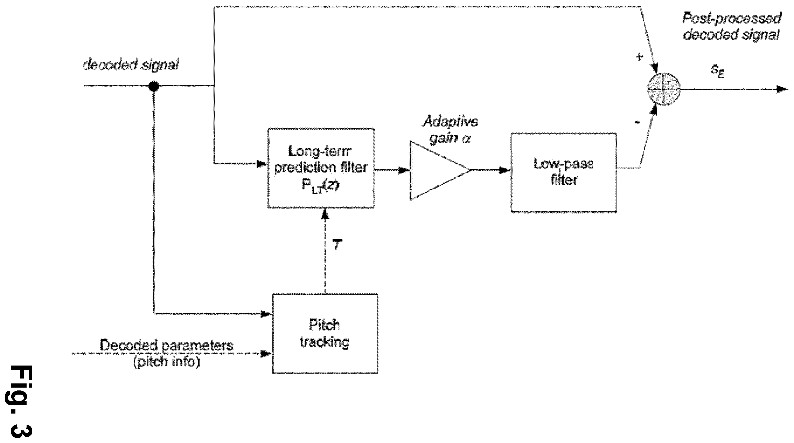

and S is the decoded signal which is supplied as input to the post filter. Figure 3 shows an embodiment of a post filter with these characteristics, which is further discussed in section 6.1.3 of the Technical Specification ETSI TS 126 290, version 6.3.0, release 6. As this figure suggests, the pitch information is encoded as a parameter in the bit stream signal and is retrieved by a pitch tracking module communicatively connected to the long-term prediction filter carrying out the operations expressed by $P_{LT}$.

The long-term portion described in the previous paragraph may be used alone. Alternatively, it is arranged in series with a noise-shaping filter that preserves components in frequency intervals corresponding to the formants and attenuates noise in other spectral regions (short-term portion; see section III), that is, in the 'spectral valleys' of the formant envelope. As another possible variation, this filter aggregate is further supplemented by a gradual high-pass-type filter to reduce a perceived deterioration due to spectral tilt of the short-term portion.

Document M. Neuendorf (ed.): WD7 of USAC, 92th MPEG Meeting, Dresden, N11299, and document WO 99/38144 disclose audio processing systems with selective application of post-filtering.

Audio signals containing a mixture of components of different origins - e.g., tonal, non-tonal, vocal, instrumental, non-musical - are not always reproduced by available digital coding technologies in a satisfactory manner. It has more precisely been noted that available technologies are deficient in handling such non-homogeneous audio material, generally favouring one of the components to the detriment of the other. In particular, music containing singing accompanied by one or more instruments or choir parts which has been encoded by methods of the nature described above, will often be decoded with perceptible artefacts spoiling part of the listening experience.

Summary of the invention

In order to mitigate at least some of the drawbacks outlined in the previous section, it is an object of the present invention to provide methods and devices adapted for audio encoding and decoding of signals containing a mixture of components of different origins. As particular objects, the invention seeks to provide such methods and devices that are suitable from the point of view of coding efficiency or (perceived) reproduction fidelity or both.

The invention achieves at least one of these objects by providing a decoder system, a method of decoding and a computer program product for carrying out the method, as defined in the independent claims. The dependent claims define embodiments of the invention.

The inventors have realized that some artefacts perceived in decoded audio signals of non-homogeneous origin derive from an inappropriate switching between several coding modes of which at least one includes post filtering at the decoder and at least one does not. More precisely, available post filters remove not only interharmonic noise (and, where applicable, noise in spectral valleys) but also signal components representing instrumental or vocal accompaniment and other material of a 'desirable' nature. The fact that *the just noticeable difference* in spectral valleys may be as large as 10 dB (as noted by Ghitza and Goldstein, IEEE Trans. Acoust., Speech, Signal Processing, vol. ASSP-4, pp. 697-708, 1986) may have been taken as a justification by many designers to filter these frequency bands severely. The quality degradation by the interharmonic (and spectral-valley) attenuation itself may however be less important than that of the switching occasions. When the post filter is switched on, the background of a singing voice sounds suddenly muffled, and when the filter is deactivated, the background instantly becomes more sonorous. If the switching takes place frequently, due to the nature of the audio signal or to the configuration of the coding device, there will be a switching artefact. As one example, a USAC decoder may be operable either in an ACELP mode combined with post filtering or in a TCX mode without post filtering. The ACELP mode is used in episodes where a dominant vocal component is present. Thus, the switching into the ACELP mode may be triggered by the onset of singing, such as at the beginning of a new musical phrase, at the beginning of a new verse, or simply after an episode where the accompaniment is deemed to drown the singing voice in the sense that the vocal component is no longer prominent. Experiments have confirmed that an alternative solution, or rather circumvention of the problem, by which TCX coding is used throughout (and the ACELP mode is disabled) does not remedy the problem, as reverb-like artefacts appear.

It is noted that the methods and apparatus disclosed in this section may be applied, after appropriate modifications within the skilled person's abilities including routine experimentation, to coding of signals having several components, possibly corresponding to different channels, such as stereo channels. Throughout the present application, pitch enhancement and post filtering are used as synonyms. It is further noted that AAC is discussed as a representative example of frequency-domain coding methods. Indeed, applying the invention to a decoder or encoder operable in a frequency-domain coding mode other than AAC will only require small modifications, if any, within the skilled person's abilities. Similarly, TCX is mentioned as an example of weighted linear prediction transform coding and of transform coding in general.

Features from two or more embodiments described hereinabove can be combined, unless they are clearly complementary, in further embodiments. The fact that two features are recited in different claims does not preclude that they can be combined to advantage. Likewise, further embodiments can also be provided by the omission of certain features that are not necessary or not essential for the desired purpose.

Brief description of the drawings

Embodiments of the present invention will now be described with reference to the accompanying drawings, on which:

figures 1 is a block diagram showing a conventional decoder with post filter;
figure 2 is a schematic block diagram of a conventional decoder operable in AAC, ACELP and TCX mode and including a post filter permanently connected downstream of the ACELP module;
figure 3 is a block diagram illustrating the structure of a post filter;
figures 4 and 5 are block diagrams of two decoders according to the invention;
figure 6 and 7 are block diagrams illustrating differences between a conventional decoder (figure 6) and a decoder (figure 7) according to the invention;
figure 8 is a block diagram of an encoder compatible with a decoder according to the invention;
figures 9 and 10 are a block diagrams illustrating differences between a conventional decoder (figure 9) and a decoder (figure 10) according to the invention; and
figure 11 is a block diagram of an autonomous post filter which can be selectively activated and deactivated.

Detailed description of embodiments

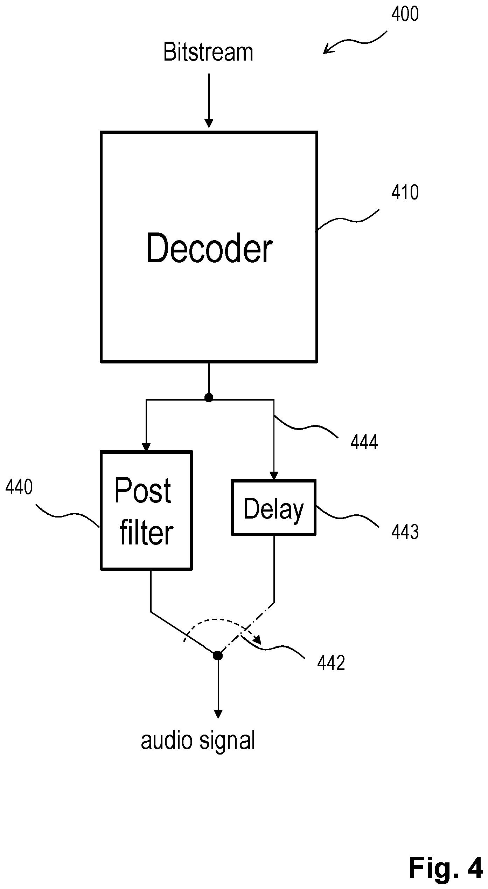

Figure 4 is a schematic drawing of a decoder system 400 according to an embodiment of the invention, having as its input a bit stream signal and as its output an audio signal. As in the conventional decoders shown in figure 1, a post filter 440 is arranged downstream of a decoding module 410 but can be switched into or out of the decoding path by operating a switch 442. The post filter is enabled in the switch position shown in the figure. It would be disabled if the switch was set in the opposite position, whereby the signal from the decoding module 410 would instead be conducted over the bypass line 444. As an inventive contribution, the switch 442 is controllable by post filtering information contained in the bit stream signal, so that post filtering may be applied and removed irrespectively of the current status of the decoding module 410. Because a post filter 440 operates at some delay - for example, the post filter shown in figure 3 will introduce a delay amounting to at least the pitch period T - a compensation delay module 443 is arranged on the bypass line 444 to maintain the modules in a synchronized condition at switching. The delay module 443 delays the signal by the same period as the post filter 440 would, but does not otherwise process the signal. To minimize the change-over time, the compensation delay module 443 receives the same signal as the post filter 440 at all times. In an alternative embodiment where the post filter 440 is replaced by a zero-delay post filter (e.g., a causal filter, such as a filter with two taps, independent of future signal values), the compensation delay module 443 can be omitted.

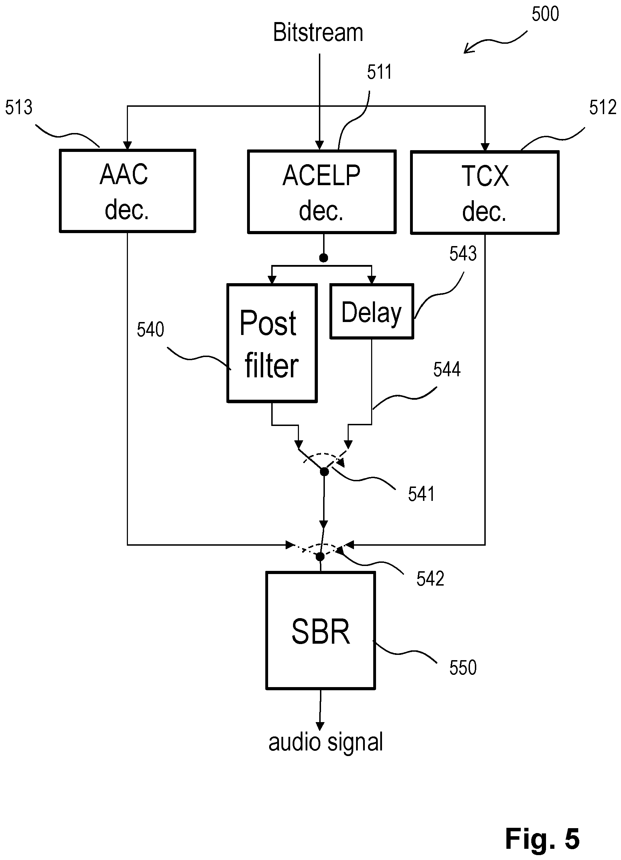

Figure 5 illustrates a further development according to the teachings of the invention of the triple-mode decoder system 500 of figure 2. An ACELP decoding module 511 is arranged in parallel with a TCX decoding module 512 and an AAC decoding module 513. In series with the ACELP decoding module 511 is arranged a post filter 540 for attenuating noise, particularly noise located between harmonics of a pitch frequency directly or indirectly derivable from the bit stream signal for which the decoder system 500 is adapted. The bit stream signal also encodes post filtering information governing the positions of an upper switch 541 operable to switch the post filter 540 out of the processing path and replace it with a compensation delay 543 like in figure 4. A lower switch 542 is used for switching between different decoding modes. With this structure, the position of the upper switch 541 is immaterial when one of the TCX or AAC modules 512, 513 is used; hence, the post filtering information does not necessary indicate this position except in the ACELP mode. Whatever decoding mode is currently used, the signal is supplied from the downstream connection point of the lower switch 542 to a spectral band replication (SBR) module 550, which outputs an audio signal. The skilled person will realize that the drawing is of a conceptual nature, as is clear notably from the switches which are shown schematically as separate physical entities with movable contacting means. In a possible realistic implementation of the decoder system, the switches as well as the other modules will be embodied by computer-readable instructions.

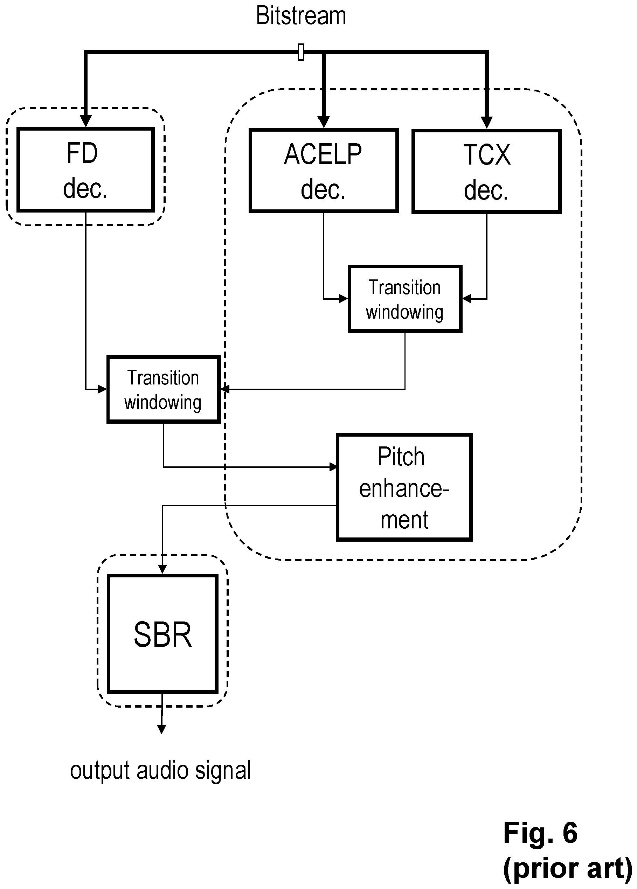

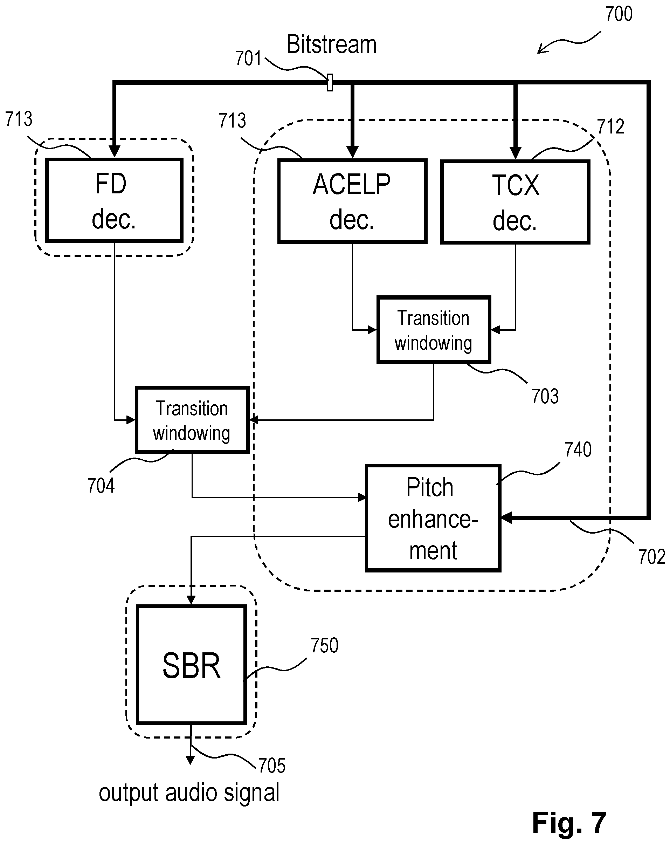

Figures 6 and 7 are also block diagrams of two triple-mode decoder systems operable in an ACELP, TCX or frequency-domain decoding mode. With reference to the latter figure, which shows an embodiment of the invention, a bit stream signal is supplied to an input point 701, which is in turn permanently connected via respective branches to the three decoding modules 711, 712, 713. The input point 701 also has a connecting branch 702 (not present in the conventional decoding system of figure 6) to a pitch enhancement module 740, which acts as a post filter of the general type described above. As is common practice in the art, a first transition windowing module 703 is arranged downstream of the ACELP and TCX modules 711, 712, to carry out transitions between the decoding modules. A second transition module 704 is arranged downstream of the frequency-domain decoding module 713 and the first transition windowing module 703, to carry out transition between the two super-modes. Further a SBR module 750 is provided immediately upstream of the output point 705. Clearly, the bit stream signal is supplied directly (or after demultiplexing, as appropriate) to all three decoding modules 711, 712, 713 and to the pitch enhancement module 740. Information contained in the bit stream controls what decoding module is to be active. By the invention however, the pitch enhancement module 740 performs an analogous self actuation, which responsive to post filtering information in the bit stream may act as a post filter or simply as a pass-through. This may for instance be realized through the provision of a control section (not shown) in the pitch enhancement module 740, by means of which the post filtering action can be turned on or off. The pitch enhancement module 740 is always in its pass-through mode when the decoder system operates in the frequency-domain or TCX decoding mode, wherein strictly speaking no post filtering information is necessary. It is understood that modules not forming part of the inventive contribution and whose presence is obvious to the skilled person, e.g., a demultiplexer, have been omitted from figure 7 and other similar drawings to increase clarity.

As a variation, the decoder system of figure 7 may be equipped with a control module (not shown) for deciding whether post filtering is to be applied using an analysis-by-synthesis approach. Such control module is communicatively connected to the pitch enhancement module 740 and to the ACELP module 711, from which it extracts an intermediate decoded signal $s_{i\_DEC}(n)$ representing an intermediate stage in the decoding process, preferably one corresponding to the excitation of the signal. The detection module has the necessary information to simulate the action of the pitch enhancement module 740, as defined by the transfer functions $P_{LT}(z)$ and $H_{LP}(z)$ (cf. *Background* section and figure 3), or equivalently their filter impulse responses $p_{LT}(z)$ and $h_{LP}(n)$. As follows by the discussion in the *Background* section, the component to be subtracted at post filtering can be estimated by an approximate difference signal $s_{AD}(n)$ which is proportional to $[(s_{i\_DEC} * p_{LT}) * h_{LP}](n)$, where $*$ denotes discrete convolution. This is an approximation of the true difference between the original audio signal and the post-filtered decoded signal, namely

$$s_{ORIG}(n) - s_E(n) = s_{ORIG}(n) - (s_{DEC}(n) - \alpha[s_{DEC} * p_{LT} * h_{LP}](n)),$$

where $\alpha$ is the post filter gain. By studying the total energy, low-band energy, tonality, actual magnitude spectrum or past magnitude spectra of this signal, as disclosed in the *Summary* section and the claims, the control section may find a basis for the decision whether to activate or deactivate the pitch enhancement module 740.

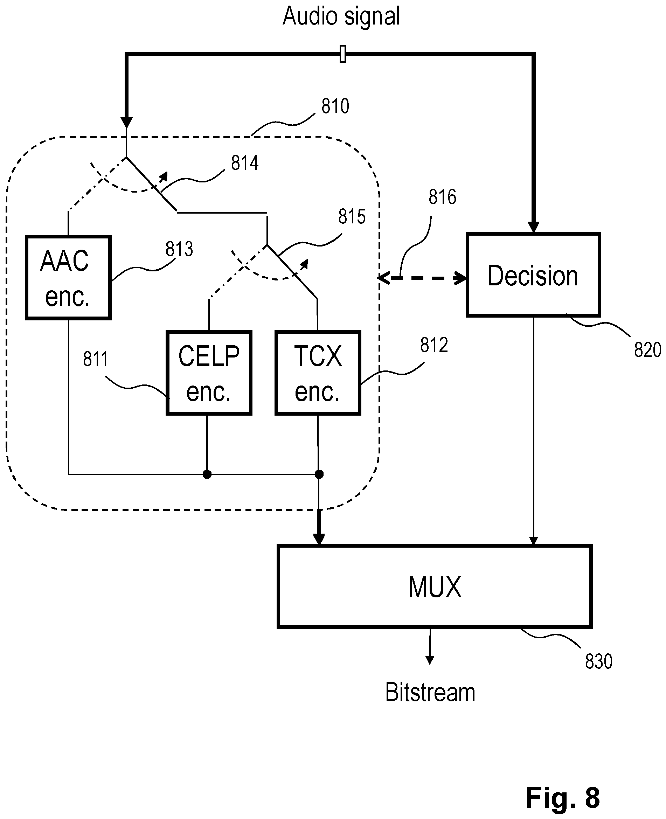

Figure 8 shows an encoder system 800 compatible with a decoder according to an embodiment of the invention. The encoder system 800 is adapted to process digital audio signals, which are generally obtained by capturing a sound wave by a microphone and transducing the wave into an analog electric signal. The electric signal is then sampled into a digital signal susceptible to be provided, in a suitable format, to the encoder system 800. The system generally consists of an encoding module 810, a decision module 820 and a multiplexer 830. By virtue of switches 814, 815 (symbolically represented), the encoding module 810 is operable in either a CELP, a TCX or an AAC mode, by selectively activating modules 811, 812, 813. The decision module 820 applies one or more predefined criteria to decide whether a bit stream signal produced by the encoder system 800 to encode an audio signal. For this purpose, the decision module 820 may examine the audio signal directly or may receive data from the encoding module 810 via a connection line 816. A signal indicative of the decision taken by the decision module 820 is provided, together with the encoded audio signal from the encoding module 810, to a multiplexer 830, which concatenates the signals into a bit stream constituting the output of the encoder system 800.

Preferably, the decision module 820 bases its decision on an approximate difference signal computed from an intermediate decoded signal $s_{i\_DEC}$, which can be subtracted from the encoding module 810. The intermediate decoded signal represents an intermediate stage in the *decoding* process, as discussed in preceding paragraphs, but may be extracted from a corresponding stage of the *encoding* process. However, in the encoder system 800 the original audio signal $s_{ORIG}$ is available so that, advantageously, the approximate difference signal is formed as:

$$s_{ORIG}(n) - (s_{i\_DEC}(n) - \alpha[(s_{i\_DEC} * p_{LT}) * h_{LP}](n)).$$

The approximation resides in the fact that the intermediate decoded signal is used in lieu of the final decoded signal. This enables an appraisal of the nature of the component that a post filter would remove at decoding, and by applying one of the criteria discussed in the *Summary* section, the decision module 820 will be able to take a decision whether to disable post filtering.

As a variation to this, the decision module 820 may use the original signal in place of an intermediate decoded signal, so that the approximate difference signal will be $[(s_{i\_DEC} * p_{LT}) * h_{LP}](n)$. This is likely to be a less faithful approximation but on the other hand makes the presence of a connection line 816 between the decision module 820 and the encoding module 810 optional.

In such other variations of this embodiment where the decision module 820 studies the audio signal directly, one or more of the following criteria may be applied:

- Does the audio signal contain both a component with dominant fundamental frequency and a component located below the fundamental frequency? (The fundamental frequency may be supplied as a by-product of the encoding module 810.)
- Does the audio signal contain both a component with dominant fundamental frequency and a component located between the harmonics of the fundamental frequency?
- Does the audio signal contain significant signal energy below the fundamental frequency?
- Is post-filtered decoding (likely to be) preferable to unfiltered decoding with respect to rate-distortion optimality?

In all the described variations of the encoder structure shown in figure 8 - that is, irrespectively of the basis of the detection criterion - the decision section 820 may be enabled to decide on a gradual onset or gradual removal of post filtering, so as to achieve smooth transitions. The gradual onset and removal may be controlled by adjusting the post filter gain.

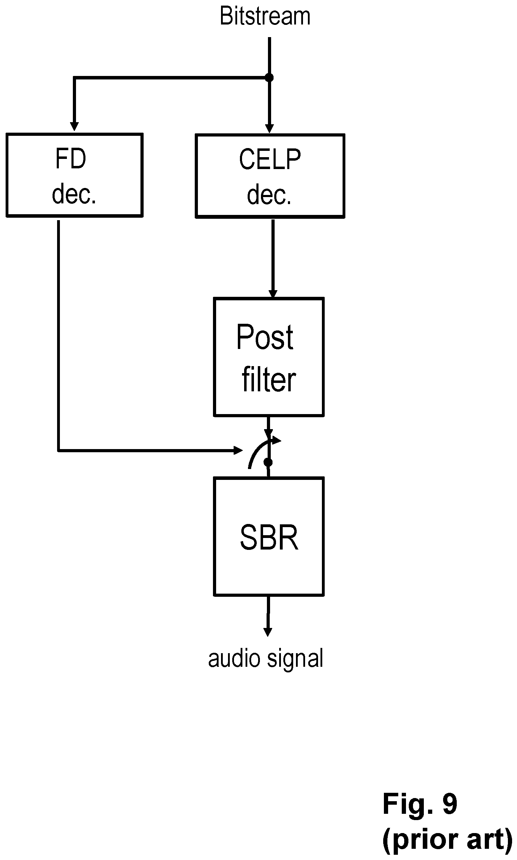

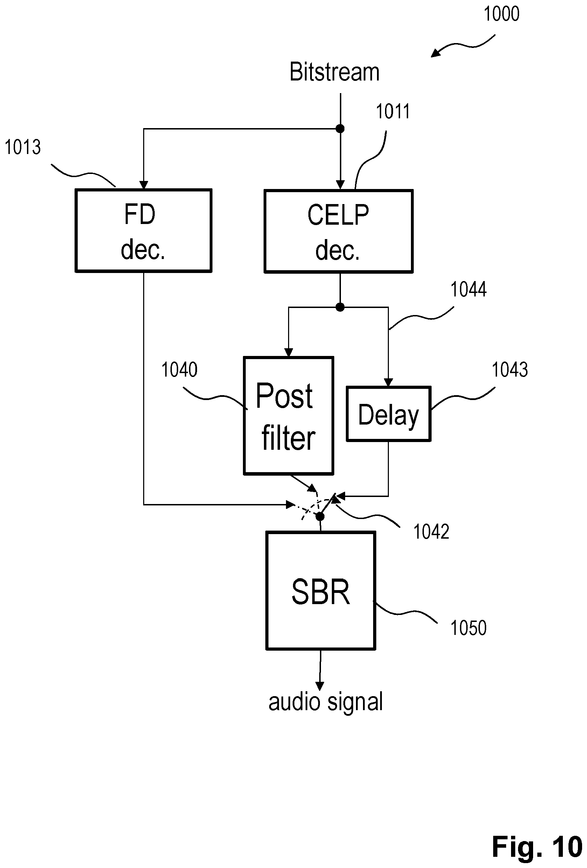

Figure 9 shows a conventional decoder operable in a frequency-decoding mode and a CELP decoding mode depending on the bit stream signal supplied to the decoder. Post filtering is applied whenever the CELP decoding mode is selected. An improvement of this decoder is illustrated in figure 10, which shows an decoder 1000 according to an embodiment of the invention. This decoder is operable not only in a frequency-domain-based decoding mode, wherein the frequency-domain decoding module 1013 is active, and a filtered CELP decoding mode, wherein the CELP decoding module 1011 and the post filter 1040 are active, but also in an unfiltered CELP mode, in which the CELP module 1011 supplies its signal to a compensation delay module 1043 via a bypass line 1044. A switch 1042 controls what decoding mode is currently used responsive to post filtering information contained in the bit stream signal provided to the decoder 1000. In this decoder and that of figure 9, the last processing step is effected by an SBR module 1050, from which the final audio signal is output.

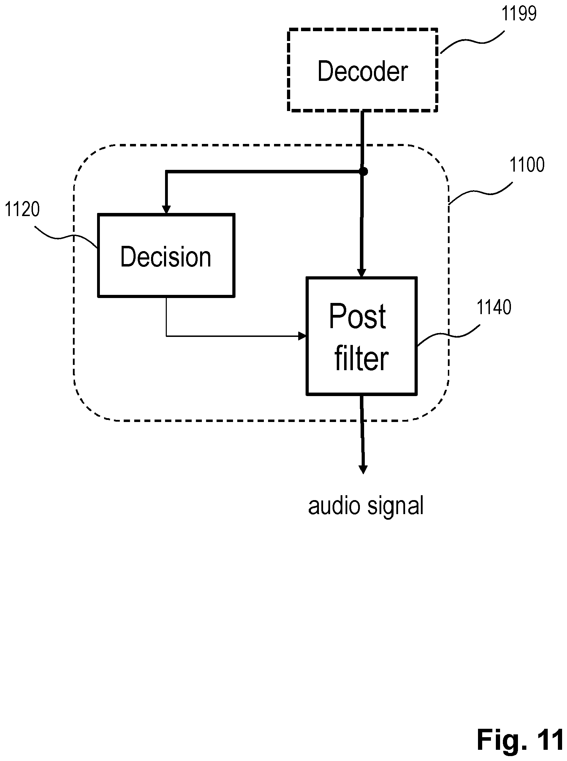

Figure 11 shows a post filter 1100 suitable to be arranged downstream of a decoder 1199. The filter 1100 includes a post filtering module 1140, which is enabled or disabled by a control module (not shown), notably a binary or non-binary gain controller, in response to a post filtering signal received from a decision module 1120 within the post filter 1100. The decision module performs one or more tests on the signal obtained from the decoder to arrive at a decision whether the post filtering module 1140 is to be active or inactive. The decision may be taken along the lines of the functionality of the decision module 820 in figure 8, which uses the original signal and/or an intermediate decoded signal to predict the action of the post filter. The decision of the decision module 1120 may also be based on similar information as the decision modules uses in those embodiments where an intermediate decoded signal is formed. As one example, the decision module 1120 may estimate a pitch frequency (unless this is readily extractable from the bit stream signal) and compute the energy content in the signal below the pitch frequency and between its harmonics. If this energy content is significant, it probably represents a relevant signal component rather than noise, which motivates a decision to disable the post filtering module 1140.

A 6-person listening test has been carried out, during which music samples encoded and decoded according to the invention were compared with reference samples containing the same music coded while applying post filtering in the conventional fashion but maintaining all other parameters unchanged. The results confirm a perceived quality improvement.

Further embodiments of the present invention will become apparent to a person skilled in the art after reading the description above. Even though the present description and drawings disclose embodiments and examples, the invention is not restricted to these specific examples. Numerous modifications and variations can be made without departing from the scope of the present invention, which is defined by the accompanying claims.

The systems and methods disclosed hereinabove may be implemented as software, firmware, hardware or a combination thereof. Certain components or all components may be implemented as software executed by a digital signal processor or microprocessor, or be implemented as hardware or as an application-specific integrated circuit. Such software may be distributed on computer readable media, which may comprise computer storage media (or non-transitory media) and communication media (or transitory media). As is well known to a person skilled in the art, computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by a computer. Further, it is well known to the skilled person that communication media typically embodies computer readable instructions, data structures, program modules or other data in a modulated data signal such as a carrier wave or other transport mechanism and includes any information delivery media.

**Claims**

1. A decoder system (400; 500; 700; 1000) for decoding a bit stream signal as an audio time signal, including:

   a decoding section (410; 511, 512, 513; 711, 712, 713; 1011, 1013) for decoding a bit stream signal as a preliminary audio time signal by applying a decoding method adapted for speech decoding, and for estimating or extracting a pitch frequency from the bit stream signal; and
   a post filter (440; 540; 740; 1040) for filtering the preliminary audio time signal to attenuate noise located between harmonics of the pitch frequency to obtain an audio time signal, wherein the interharmonic noise attenuation is controlled by a post filter gain,
   further comprising a control section adapted to selectively disable the post filter, by setting the post filter gain to zero, responsive only to post-filtering information encoded in the bit stream signal, the post-filtering information being indicative of an encoder-side decision whether to disable post filtering,
   wherein the preliminary audio time signal is output as the audio time signal.

2. The decoder system of claim 1, wherein the post-filtering is applied only to low frequencies.

3. The decoder system of claim 1,

   said decoding section including a code-excited linear prediction, CELP, decoding module (511; 711; 1011), and the decoding section further comprising a transform-coded excitation, TCX, decoding module (512; 712) for decoding a bit stream signal as an audio time signal,
   the control section being adapted operate the decoder system in at least the following modes:

      a) the TCX module is enabled and the post filter is disabled;
      b) the CELP module and the post filter are enabled; and
      c) the CELP module is enabled and the post filter is disabled, wherein the preliminary audio time signal and the audio time signal coincide.

4. The decoder system of claim 1,
   wherein the bit stream signal is segmented into time frames and the control section is adapted to disable an entire time frame or a sequence of entire time frames.

5. The decoder system of claim 4,
   wherein the control section is further adapted to receive, for each time frame in a Moving Pictures Experts Group, MPEG, bit stream, a data field associated with this time frame and is operable, responsive to the value of the data field, to disable the post filter.

6. The decoder system of claim 1, wherein the control section is adapted to decrease and/or increase the gain of the post filter gradually.

7. A method of decoding a bit stream signal as an audio time signal, including the steps of:

   decoding a bit stream signal as a preliminary audio time signal by applying a decoding method adapted for speech decoding;
   extracting or estimating a pitch frequency from the bit stream signal; and
   post-filtering the preliminary audio time signal by attenuating noise located between harmonics of the pitch frequency, thereby obtaining an audio time signal, wherein the interharmonic noise attenuation is controlled by a post filter gain,
   wherein the post-filtering step is selectively omitted, by setting the post filter gain to zero, responsive only to post-filtering information encoded in the bit stream signal, the post-filtering information being indicative of an encoder-side decision whether to disable post filtering.

8. A computer-program product including a data carrier storing instructions which, when executed on a digital signal processor, cause the digital signal processor to perform the method of claim 7.


**Patentansprüche**

1. Decoder-System (400; 500; 700; 1000) zur Decodieren eines Bitstromsignals als ein Audiozeitsignal, einschließlich:

   einem Decodierabschnitt (410; 511, 512, 513; 711, 712, 713; 1011, 1013) zum Decodieren eines Bitstromsignals als ein vorläufiges Audiozeitsignal durch Anwendung eines Decodierverfahrens, das für die Sprachdecodierung geeignet ist, und zum Schätzen oder Extrahieren einer Tonhöhenfrequenz aus dem Bitstromsignal; und
   einem Nachfilter (440; 540; 740; 1040) zum Filtern des vorläufigen Audiozeitsignals, um Rauschen zu dämpfen, das sich zwischen Harmonischen der Tonhöhenfrequenz befindet, um ein Audiozeitsignal zu erhalten, wobei die Dämpfung zwischenharmonischen Rauschens durch eine Nachfilterverstärkung gesteuert wird,
   weiter umfassend einen Steuerabschnitt, der so ausgelegt ist, dass er den Nachfilter nur in Reaktion auf im Bitstromsignal codierte Nachfilterinformationen durch Setzen der Nachfilterverstärkung auf Null selektiv deaktiviert, wobei die Nachfilterinformationen eine encoderseitige Entscheidung anzeigen, ob das Nachfiltern zu deaktivieren ist,
   wobei das vorläufige Audiozeitsignal als das Audiozeitsignal ausgegeben wird.

2. Decoder-System nach Anspruch 1, wobei die Nachfilterung nur auf niedrige Frequenzen angewendet wird.

3. Decoder-System nach Anspruch 1,

   wobei der Decodierabschnitt ein CELP-Decodiermodul (511; 711; 1011) einschließt, und
   wobei der Decodierabschnitt weiter ein transformationscodiertes Erregung-Decodiermodul (512; 712) zum Decodieren eines Bitstromsignals als ein Audiozeitsignal umfasst,
   wobei der Steuerabschnitt so ausgelegt ist, dass er das Decoder-System wenigstens in den folgenden Modi betreibt:

   a) das TCX-Modul wird aktiviert und das Nachfilter wird deaktiviert;
   b) das CELP-Modul und das Nachfilter werden aktiviert; und
   c) das CELP-Modul wird aktiviert und das Nachfilter wird deaktiviert, wobei das vorläufige Audiozeitsignal und das Audiozeitsignal übereinstimmen.

4. Decoder-System nach Anspruch 1,
   wobei das Bitstromsignal in Zeitrahmen segmentiert ist und der Steuerabschnitt zum Deaktivieren eines ganzen Zeitrahmens oder eine Folge von ganzen Zeitrahmens ausgelegt ist.

5. Decoder-System nach Anspruch 4,
   wobei der Steuerabschnitt ferner so ausgelegt ist, dass er für jeden Zeitrahmen in einem MPEG (Moving Pictures Experts Group)-Bitstrom ein mit diesem Zeitrahmen assoziiertes Datenfeld empfängt und ferner so betrieben werden kann, dass er in Reaktion auf den Wert des Datenfeldes das Nachfilter deaktiviert.

6. Decoder-System nach Anspruch 1, wobei der Steuerabschnitt so ausgelegt ist, dass er die Verstärkung des Nachfilters schrittweise verringert und/oder erhöht.

7. Verfahren zum Decodieren eines Bitstromsignals als ein Audiozeitsignal, einschließlich der folgenden Schritte:

   Decodieren eines Bitstromsignals als eines vorläufiges Audiozeitsignal durch Anwendung eines für die Sprachdecodierung geeigneten Decodierungsverfahrens;
   Extrahieren oder Schätzen einer Tonfrequenz aus dem Bitstromsignal; und
   Nachfiltern des vorläufigen Audiozeitsignals durch Dämpfen von Rauschen, das sich zwischen Harmonischen der Tonfrequenz befindet, wodurch ein Audiozeitsignal erhalten wird, wobei die Dämpfung zwischenharmonischen Rauschens durch eine Nachfilterverstärkung gesteuert wird,
   wobei der Nachfilterungsschritt nur in Reaktion auf im Bitstromsignal codierte Nachfilterungsinformationen durch Setzen der Nachfilterverstärkung auf Null selektiv weggelassen wird, wobei die Nachfilterungsinformationen eine encoderseitige Entscheidung anzeigen, ob die Nachfilterung deaktiviert werden soll.

8. Computerprogrammprodukt welches einen Datenträger einschließt, der Anweisungen speichert, die, wenn sie auf einem digitalen Signalprozessor ausgeführt werden, den digitalen Signalprozessor veranlassen, das Verfahren nach Anspruch 7 durchzuführen.

**Revendications**

1. Système décodeur (400 ; 500 ; 700 ; 1000) permettant de décoder un signal de train de bits en tant qu'un signal temporel audio, incluant :

   une section de décodage (410 ; 511, 512, 513 ; 711, 712, 713 ; 1011, 1013) permettant de décoder un signal de train de bits en tant qu'un signal temporel audio préliminaire en appliquant un procédé de décodage adapté au décodage de parole, et permettant d'estimer ou d'extraire une fréquence de tonalité à partir du signal de train de bits ; et
   un post-filtre (440 ; 540 ; 740 ; 1040) pour filtrer le signal temporel audio préliminaire pour atténuer le bruit situé entre les harmoniques de la fréquence de tonalité afin d'obtenir un signal temporel audio, dans lequel l'atténuation de bruit entre les harmoniques est commandée par un gain de post-filtrage,
   comprenant en outre une section de commande adaptée pour désactiver sélectivement le post-filtre, en réglant le gain de post-filtrage à zéro, en réponse uniquement à des informations de post-filtrage codées dans le signal de train de bits, les informations de post-filtrage étant indicatives d'une décision du côté codeur de désactiver ou non le post-filtrage,
   dans lequel le signal temporel audio préliminaire est délivré en sortie en tant que signal temporel audio.

2. Système de décodeur selon la revendication 1, dans lequel le post-filtrage est appliqué uniquement aux basses fréquences.

3. Système de décodeur selon la revendication 1,

   ladite section de décodage incluant un module de décodage de prédiction linéaire à excitation par code, CELP (511 ; 711 ; 1011), et
   la section de décodage comprenant en outre un module de décodage de l'excitation codée par transformée, TCX (512 ; 712) pour décoder un signal de train de bits en tant qu'un signal temporel audio,
   la section de commande étant adaptée pour faire fonctionner le système de décodeur dans au moins les modes suivants :

   a) le module TCX est activé et le post-filtre est désactivé ;
   b) le module CELP et le post-filtre sont activés ; et
   c) le module CELP est activé et le post-filtre est désactivé, dans lequel le signal temporel audio préliminaire et le signal temporel audio coïncident.

4. Système de décodeur selon la revendication 1,
   dans lequel le signal de train de bits est segmenté en trames temporelles et la section de commande est adaptée pour désactiver une frame temporelle entière ou une séquence de trames temporelles entières.

5. Système de décodeur selon la revendication 4,
   dans lequel la section de commande est en outre adaptée pour recevoir, pour chaque trame temporelle d'un train de bits Moving Pictures Experts Group, MPEG, un champ de données associé à cette trame temporelle et est capable, en réponse à la valeur du champ de données, de désactiver le post-filtre.

6. Système de décodeur selon la revendication 1, dans lequel la section de commande est adaptée pour réduire et/ou augmenter le gain du post-filtre progressivement.

7. Procédé de décodage d'un signal de train de bits en tant qu'un signal temporel audio, incluant les étapes consistant à :

   décoder un signal de train de bits en tant qu'un signal temporel audio préliminaire en appliquant un procédé de décodage adapté au décodage de parole ;
   extraire ou estimer une fréquence de tonalité à partir du signal de train de bits ; et
   post-filtrer le signal temporel audio préliminaire en atténuant le bruit situé entre les harmoniques de la fréquence de tonalité, obtenant ainsi un signal temporel audio, dans lequel l'atténuation de bruit entre les harmoniques est commandée par un gain de post-filtrage,

dans lequel l'étape de post-filtrage est sélectivement omise, en réglant le gain de post-filtrage à zéro, en réponse uniquement à des informations de post-filtrage codées dans le signal de train de bits, les informations de post-filtrage étant indicatives d'une décision du côté codeur de désactiver ou non le post-filtrage.

8. Produit de programme informatique incluant un support de données stockant des instructions qui, lorsqu'elles sont exécutées sur un processeur de signal numérique, amènent le processeur de signal numérique à exécuter le procédé selon la revendication 7.

Bitstream

Decoder

Post
filter

audio signal

**Fig. 1
(prior art)**

Bitstream

Fig. 2
(prior art)

Fig. 3

400

Bitstream

Decoder

410

444

440

Post filter

Delay

443

442

audio signal

**Fig. 4**

Fig. 5

EP 3 971 893 B1

Bitstream

Fig. 6
(prior art)

16

Fig. 7

**Fig. 8**

Bitstream

FD
dec.

CELP
dec.

Post
filter

SBR

audio signal

Fig. 9
(prior art)

Fig. 10

EP 3 971 893 B1

Fig. 11

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 19196423
- US 4969192 A
- WO 9938144 A

**Non-patent literature cited in the description**

- **R. SCHROEDER ; S. ATAL.** *Proceedings of the IEEE International Conference on Acoustics, Speech, and Signal Processing (ICASSP),* 1985, vol. 10, 937-940
- **CHEN ; GERSHO.** *IEEE Transactions on Speech and Audio Processing,* 1995, vol. 3 (1
- WD7 of USAC, 92th MPEG Meeting, Dresden, N11299
- **GHITZA ; GOLDSTEIN.** *IEEE Trans. Acoust., Speech, Signal Processing,* 1986, vol. ASSP-4, 697-708